# EUROPEAN PATENT SPECIFICATION

(11) **EP 0 470 040 B1**
(45) Date of publication and mention of the grant of the patent: **11.09.1996**
(21) Application number: 91630046.0
(22) Date of filing: 23.07.1991
(51) Int. Cl.: C08F 236/04, C08F 2/44

(54) **Process for the preparation of a rubber having polymer bound functionality**
Verfahren zur Herstellung von Kautschuk mit funktionellen Gruppen im Polymer
Procédé de préparation d'un caoutchouc avec des groupes fonctionnels dans le polymère

(30) Priority: 02.08.1990 US 562051
(43) Date of publication of application: 05.02.1992
(73) Proprietor: THE GOODYEAR TIRE & RUBBER COMPANY, Akron, Ohio 44316-0001 (US)
(72) Inventor: Schulz, Gerald Owen, Stow, Ohio 44224 (US); Parker, Dane Kenton, Massillon, Ohio 44646 (US)
(74) Representative: Leitz, Paul

(56) References cited:
- US-A- 3 867 331
- US-A- 4 521 574

## Description

### Background of the Invention

The present invention relates to a process for preparing a rubber containing polymer bound functionalities. More specifically, the present invention relates to a process for forming a rubber comprising the emulsion polymerization at a temperature ranging from 0°C to 25°C of (a) at least one functionalized monomer that contains a polymerizable vinyl group with (b) at least one copolymerizable conjugated diene monomer selected from the group consisting of butadiene-1,3, 2-chlorobutadiene-1,3, isoprene, piperylene and conjugated hexadienes; wherein the polymerization is conducted in the presence of a plasticizer that functions as a cosolvent/dispersing agent for the functionalized monomer during the cold emulsion polymerization and as a plasticizer for the final polymer product.

Polymer bound functionalities, and especially antidegradants, have been used in rubber. Preparation of rubbers having polymer bound functionalities involves the use of copolymerizable functionalized monomers. Many of these copolymerizable monomers are polar, high melting solids which are only slightly soluble in the copolymerizable diene monomers typically employed to prepare rubber. The solubility of these chemicals limits the level to which they can be polymerized.

US-A-3,658,769, 3,767,628 and 4,213,892 describe the preparation of compounds such as N-(4-anilinophenyl) methacrylamide and N-(4-anilinophenyl) acrylamide and the polymerization of such compounds with typical monomers. These references suggest that a solvent such as methylethyl ketone or isopropyl alcohol may be required to obtain adequate solubility of the monomers. Unfortunately, the use of cosolvents like methylethylketone (MEK) and isopropyl alcohol is limited in emulsion polymerization systems due to the tendency of these solvents to destabilize latex particles resulting in partial coagulation or the formation of multiple phases.

US-A-4,521,574 discloses the use of dichloromethane (DCM) and/or tetrahydrofuran (THF) as cosolvents in an emulsion polymerization; however, DCM and THF have been determined to be a potential environmental and health concern.

US-A-4,701,507 discloses the use of methyl isobutyl ketone (MIBK) as a cosolvent in an emulsion polymerization; however, MIBK is also unsuitable in many applications due to its odor and volatile nature. In addition, the use of a solubilizing cosolvent while necessary to dissolve polar, solid copolymerizable monomers in the emulsion polymerization recipe, most often will require its complete removal and economical recycle upon completion of the reaction. The steps of cosolvent addition, removal and recycle make their use inconvenient and costly.

### Summary of the Invention

The present invention relates to a process for the preparation of a rubber having polymer bound functionality as recited in the claims.

### Detailed Description of the Invention

There is disclosed a process for forming a rubber having polymer bound functionality comprising the emulsion polymerization at a temperature ranging from 0°C to 25°C of:
(a) at least one functionalized monomer that contains a polymerizable vinyl group; with
(b) at least one copolymerizable conjugated diene monomer selected from the group consisting of butadiene-1,3, 2-chlorobutadiene-1,3, isoprene, piperylene and conjugated hexadienes;
wherein the emulsion polymerization is conducted in the presence of from 1 to 70 parts by weight of a plasticizer based on 100 parts by weight of total monomers; said plasticizer being selected from:
(A) a carboxylic acid ester selected from the group consisting of diesters of triethylene glycol, dibutoxy ethoxy ethyl formate, dialkyl diether glutarate, dibutoxyethyl adipate, dibutoxyethoxyethyl adipate, di-2-ethylhexyl adipate, tetraethylene glycol diheptanoate, propylene glycol dibenzoate, dipropylene glycol dibenzoate, triethylene glycol dibenzoate, butyl octyl phthalate, dimethyl phthalate, diethyl phthalate, dibutyl phthalate, dibutoxy ethyl phthalate, di-2-ethylhexyl phthalate, tetraethylene glycol dioctoate, polyethylene glycol dioctoate, triethylene glycol di-2-ethylhexanoate, tetraethylene glycol di-2-ethylhexanoate, triethylene glycol caprate-caprylate, triethylene glycol di(caprate-caprylate), triethylene glycol dipelargonate, dibutyl sebacate, dibutoxyethyl sebacate, di-2-ethylhexyl sebacate, dioctyl sebacate, diethylene glycol mono-laurate and butoxyethyl oleate; or
(B) phosphates selected from the group consisting of 2-ethylhexyl diphenyl phosphate, iso-decyldiphenyl phosphate, tri-n-butyl phosphate, tri(2-ethylhexyl) phosphate, tributoxyethyl phosphate, tricresyl phosphate, trixylenyl phosphate and trixylyl phosphate; or
(C) formals selected from the group consisting of dibutoxyethoxy formal and di(butoxy-ethoxy-ethyl) formal; and
(D) N-butylbenzene sulfonamide.

The preferred carboxylic acid esters are polyethylene glycol dioctoate and a diester of triethylene glycol. The preferred phosphate is tributoxyethyl phosphate.

The above plasticizers are commercially available. Representative of the carboxylic acid esters that are sold commercially are Benzoflex™ 2-45, Benzoflex® 9-88, Benzoflex™ 50, Benzoflex™ 284 and Benzoflex™ S-358 (from Velsicol Chemical), Polycizer™ DBS, Polycizer™ DBP, Polycizer™ DOA, and Polycizer™ DOP, Natro-Flex™ BCA, Plasticizer™ SC, Polycizer™ DOS (from Harwick); Hatcol™ DOA, Hatcol™ 154 and Hatcol™ DOS (from Hatco Chemical); Kodaflex™ DBPO, Kodaflex™ DEP, Kodaflex™ DMP, Kodaflex™ DOA, Kodaflex™ DOP, Kodaflex™ DOTP, Kodaflex™ HS-3, Kodaflex™ TE6-EH and Kodaflex™ TXlB (from Eastman Chemical); Merrol™ 3810, Merrol™ 4200, Merrol™ 4226, Merrol™ 4295, Merrol™ 4700, Merrol™ 4800, Merrol™ DBS and Merrol™ DOS (from Merrand); Monoplex™ DOA and Monoplex™ DOS, PlastHall™ 325; PlastHall™ 203, PlastHall™ 200, PlastHall™ 207, Plasthall™ 226, PlastHall™ DBS, PlastHall™ DOA, PlastHall™ DIOA, PlastHall™ DOZ, PlastHall™ DOS, PlastHall™ 83SS, PlastHall™ 7006, PlastHall™ 7041, PlastHall™ 7045 and PlastHall™ 4141; TeqMeR™ 803 and TeqMeR® 804 (from C. P. Hall); Nopalcol™ 1-L, Plastolein™ 9404TGP (from Henkel); Santicizer™ (160 from Monsanto); and SR-650 and SR-660 (from Sartomer), Flexol™ Plasticizer 4G0 (from Union Carbide).

Representative of the phosphates which are sold commercially are KP-140, Kronitex™ 50, Kronitex™ 100, TOF™ and TXP™ (from C. P. Hall), Lindol™, Phosflex™ 179A, Phosflex™ TBEP and Phosflex™ 179C (from Harwick); Phosflex™ 179, Phosflex™ 390 and Phosflex™ T-BEP (from Stauffer Chemical); Santicizer™ 141 and Santicizer™ 148 (from Monsanto).

Representative of the formals which are sold commercially are Merrol™ 4221 (from Merrand) and TP-90B™ Plasticizer (from Morton International).

The above plasticizers function as a cosolvent and dispersing agent for the functionalized monomers in the cold emulsion polymerization, and as a plasticizer in the final polymer product. The level of plasticizer for use in the present invention may vary. Generally speaking, the level of plasticizer may range from 1 to 70 parts by weight of plasticizer per 100 parts by weight of total monomer. In those instances where one desires to prepare a rubber compound which is not going to be used as a masterbatch, a range of from 2 to 10 parts by weight of plasticizer is preferred, and a range of from 2 to 5 parts by weight is particularly preferred. In those instances where one desires to prepare a masterbatch compound, a range of from 10 to 50 parts by weight of plasticizer is preferred and a range of from 20 to 40 parts by weight is particularly preferred.

Conventional cold emulsion recipes can be employed with the present invention. However, in masterbatch recipes, some restrictions and modifications may arise either from the cosolvent, the copolymerizable monomer itself, or the polymerization parameters. Conventional ionic surfactants, known in the art, including sulfonate detergents and carboxylate soaps are useful in the instant invention. The level of ionic surfactant is computed based upon the total weight of the organic components (monomers plus cosolvents) and ranges from 2 to 30 parts by weight of ionic surfactant per 100 parts by weight of organic components with 4-25 parts by weight being more preferred and 5-12 parts by weight being most preferred in the masterbatch recipes. Those skilled in the art will appreciate that these levels are higher than usually used.

In a preferred embodiment of the present invention, the functionalized monomer is dissolved in the plasticizer while heating. The temperature of the solution may range from 50°C to 90°C. The preferred temperature ranges from 60°C to 80°C. The hot solution is then mixed with hot aqueous surfactant solution under shear agitation to form a stable emulsion. The emulsion is charged as the initial soap solution in the cold emulsion recipe. Therefore, according to this preferred embodiment, the functionalized monomer is combined with the plasticizer prior to being charged to the emulsion recipe containing the conjugated diene monomer.

Free radical initiator systems known in the art for low temperature polymerization are useful in the instant invention, however, some initiators which are strong oxidizing agents, such as persulfate systems, usually cannot be used with certain functionalized monomers, i.e., those functionalized monomers that contain moieties which are readily oxidizable. One example of such a functionalized monomer is N-(4-anilinophenyl) methacrylamide. Examples of free radical initiators that are useful in the process of the present invention are known as "redox" initiators, such as combinations of chelated iron salts, sodium formaldehyde sulfoxylate and organic hydroperoxides. Representative of organic hydroperoxides are cumene hydroperoxide, paramenthane hydroperoxide and tertiary butyl hydroperoxide. Many "azo" initiators, such as azobisisobutyronitrile are not suitable since they are generally used at high temperatures, however, "azo" initiators such as 2,2′-azobis(2,4-dimethyl-4-methoxy-valeronitrile) sold under the trademark Vazo® 33W can be used.

Cold polymerization recipes are generally used. The temperature of the polymerization generally ranges from 0° to 25°C. Preferably, the temperature of the polymerization ranges from 5° to 20°C with a range of from 10° to 18°C being particularly preferred. The cold polymerization is generally carried out to monomer conversion ranging from 65 to 80 percent. In addition, a chain transfer agent is generally used in order to avoid excessive gel formation. Incremental addition of the comonomer(s) may be necessary for complete incorporation of the copolymerizable antidegradant. Such minor modifications are within the skill of the artisan.

The present invention permits one to incorporate various levels of polymer bound functionalities into the rubber.

Examples of functionalized monomers that contains an antidegradant moiety and a polymerizable vinyl group are amides having the structural formula: 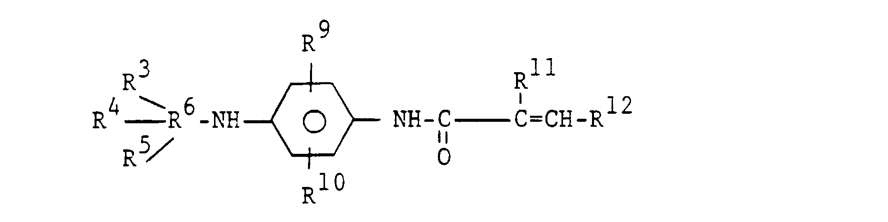 wherein R⁶ is an aryl radical, R³ and R⁴ are selected from the group consisting of hydrogen, alkyl radicals having from 1 to 4 carbon atoms and alkoxy radicals having from 1 to 4 carbon atoms, R⁵ is selected from the group consisting of hydrogen, alkyl radicals having from 1 to 4 carbon atoms, alkoxy radicals having from 1 to 4 carbon atoms and a radical having the following structural formula: 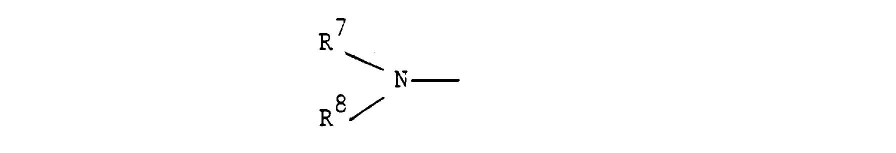 wherein R⁷ is selected from the group consisting of alkyl radicals having from 1 to 12 carbon atoms, cycloalkyl radicals having from 5 to 12 carbon atoms, aryl radicals having from 6 to 12 carbon atoms and aralkyl radicals having from 7 to 13 carbon atoms and R⁸ is selected from the group consisting of hydrogen and alkyl radicals having from 1 to 12 carbon atoms and wherein R⁹ and R¹⁰ are hydrogen or alkyl radicals having from 1 to 4 carbon atoms, R¹¹ is selected from the group consisting of hydrogen, methyl and ethyl; and R¹² is hydrogen or phenyl. Preferably R³ is hydrogen, R⁴ is hydrogen, R⁵ is hydrogen, R⁶ is an aryl radical having 6 carbon atoms, R⁹ is hydrogen, R¹⁰ is hydrogen, R¹¹ is hydrogen or an alkyl having 1 carbon atom and R¹² is hydrogen.

Other examples of functionalized monomers that contain an antidegradant moiety and a polymerizable vinyl group include imides selected from the group consisting of (1) compounds having the following structural formula: 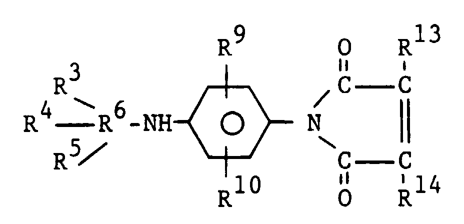 wherein R³, R⁴, R⁵, R⁹ and R¹⁰ are as previously defined herein under structural formula II and wherein R¹³ and R¹⁴ are selected from the group consisting of hydrogen and alkyl radicals having from 1 to 14 carbon atoms and (2) compounds having the following structural formula: 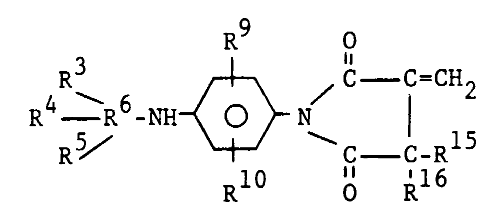 wherein R³, R⁴, R⁵, R⁶, R⁹ and R¹⁰ are as previously defined herein under structural formula I and wherein R¹⁵ and R¹⁶ are selected from the group consisting of hydrogen and alkyl radicals having from 1 to 4 carbon atoms. Preferably, R³ is hydrogen, R⁴ is hydrogen, R⁵ is hydrogen, R⁶ is an aryl having 6 carbon atoms, R⁹ is hydrogen, R¹⁰ is hydrogen, R¹³ is hydrogen, R¹⁴ is hydrogen, R¹⁵ is hydrogen, and R¹⁶ is hydrogen.

Additional examples of functionalized monomers that contain an antidegradant moiety and a polymerizable vinyl group include phenols of the structural formula: 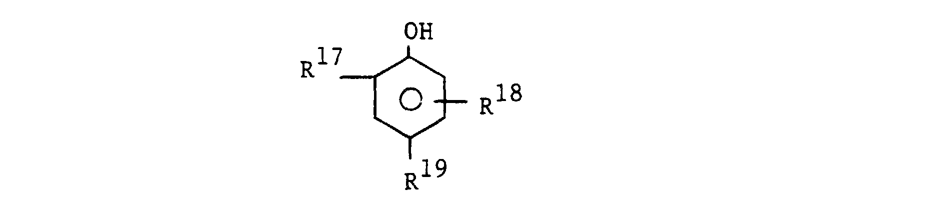 wherein R¹⁷ and R¹⁸ is a tert-alkyl radical having from 4 to 8 carbon atoms, R¹⁹ is selected from the group of radicals: 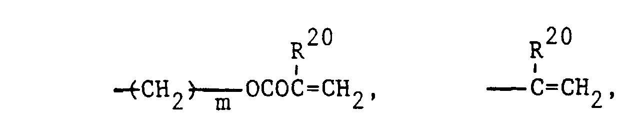 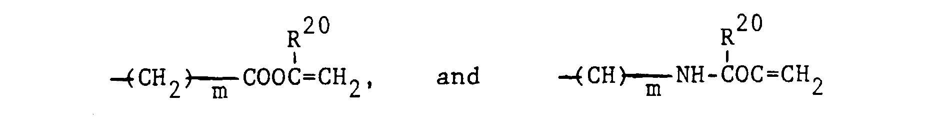 wherein R²⁰ is hydrogen or methyl and m is 0 to 3. Preferably, R¹⁷ is tertiary alkyl having 4 carbon atoms, R¹⁸ is tertiary alkyl having 4 carbon atoms, R¹⁹ is: 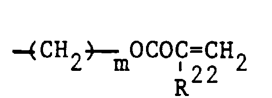 where m is 3 and R²⁰ is methyl.

Additional functionalized monomers which contain an antidegradant moiety and a polymerizable vinyl group are compounds with the structural formula: 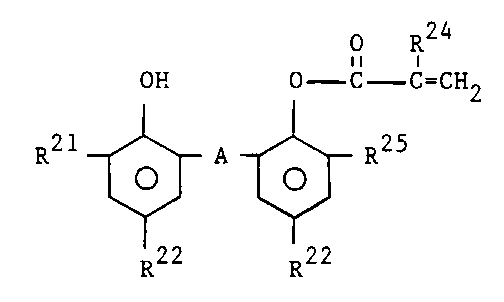 wherein R²¹ and R²² are selected from n-alkyl radicals having from 1 to 18 carbon atoms and secondary alkyl radicals having from 3 to 18 carbon atoms and t-alkyl radicals having from 4 to 8 carbon atoms; R²⁴ is H, CH₃ or C₂H₅ and A is selected from the radicals:
-CH₂-, 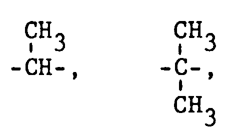 -S- and -O-.
Preferably, R²¹ is tert.alkyl having 4 carbon atoms, R²² is an n-alkyl having 1 carbon atom, R²⁴ is hydrogen or CH₃ and A is -CH₂-.

Additional functionalized monomers which contain an antidegradant moiety and a polymerizable vinyl group are compounds with the structural formula: 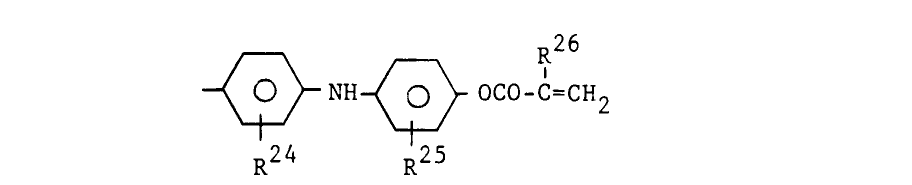 and 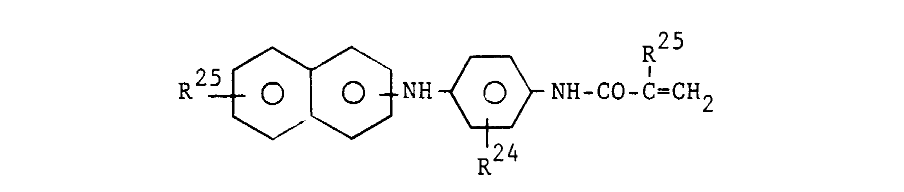 and 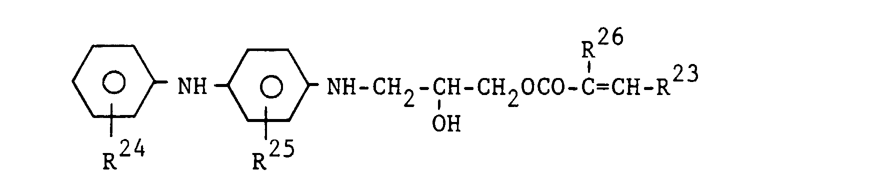 wherein each of R²⁴ and R²⁵ are alkyl radicals having from 1 to 4 carbon atoms, R²⁶ is hydrogen or methyl and R²³ is hydrogen or phenyl. Preferably, R²⁴ is hydrogen, R²⁵ is hydrogen, R²⁶ is methyl, and R²³ is hydrogen.

Examples of comonomers that are useful in the practice of this invention are conjugated diene monomers such as butadiene-1,3, 2-chlorobutadiene-1,3, isoprene, piperylene and conjugated hexadienes. One may, in addition to the conjugated monomers, use a vinyl monomer such as styrene, α-methylstyrene, divinyl benzene, vinyl chloride, vinyl acetate, vinylidene chloride, methyl methacrylate, ethyl acrylate, vinyl pyridine, acrylonitrile, methacrylonitrile, methacrylic acid, itaconic acid and acrylic acid. Mixtures of different functionalized monomers and mixtures of different comonomers may be used. The monomer charge ratio by weight is normally from 0.10/99.9 to 99.9/0.10 functionalized monomer/conjugated diene monomer (including any additional vinyl monomer. In those instances where one desires to prepare a masterbatch compound, a charge ratio by weight of 5/95 to 80/20 is preferred with 10/90 to 40/60 the most preferred. According to one embodiment, the weight ratio of functionalized monomer to conjugated diene monomer to styrene may range from 5:75:20 to 95:5:0. In those instances where on desires to prepare a compound which is not going to be used as a masterbatch, a charge ratio by weight of 0.50/99.5 to 5.0/95.0 is preferred with a range of from 1.0/99.0 to 3.0/97.0 being the most preferred. Ratios will vary depending on the amount of rubber chemical functionality desired to be incorporated and on the reactivity ratios of the monomers in the particular polymerization system used.

The present invention has particular utility in preparing polymers that have polymer bound antidegradants. To afford adequate protection against degradation, the polymer should contain from 0.5 parts to 70 parts by weight of the segmeric form of the antidegradant per 100 parts by weight of the polymer, although if a masterbatch is desired from 10 parts to 50 parts is normally satisfactory, with from 20 parts to 40 parts being preferred. The remainder of the polymer is comprised preferably of the segmeric form derived from butadiene-1,3 or isoprene and optionally the segmeric form of styrene. Preferably, the polymers contain at least 30 percent by weight of the segmeric form of butadiene or isoprene with a range of from 50 to 90 percent by weight being preferred and a range of from 60 to 80 percent by weight being particularly preferred.

The process of the present invention has significant advantage over the processes of the prior art. For example, the process of the present invention avoids the use of cosolvents such as DCM and THF which may be hazardous. Use of the present invention also avoids the need for recovery of the organic solvent. The plasticizer functioning as a co-solvent for the functionalized monomer will also provide beneficial properties in the final polymer product.

### Example 1

An emulsion was prepared by adding a hot solution (60-80°C) of 1.4 phm (parts per hundred monomer) of N-(4-anilinophenyl) methacrylamide and 2.4 phm of KP-140 to an aqueous solution under high shear agitation. KP-140 is tributoxyethyl phosphate and is commercially available from C. P. Hall. The aqueous solution contained 30 phm water, 3.0 phm potassium dodecylbenzene sulfonate, 0.22 phm Tamol™ SN (sodium salt of condensed naphthalene sulfonic acid) and 0.10 phm tripotassium phosphate. The emulsion was then mixed with a room temperature solution of 0.15 phm tripotassium phosphate in 113 phm water and the pH adjusted to 10.0-10.4. The emulsion was charged into a quart bottle. A solution of 30 phm styrene and 0.4 phm t-dodecylmercaptan was charged, followed by the addition of 0.25 cumene hydroperoxide. 70 phm of butadiene was charged and the bottle capped. An iron activator solution (0.35 phm 3% and 0.10 phm sodium formaldehyde sulfoxylate) was syringed into the bottle. The bottle was rotated in a 18°C bath ands when monomer conversion reached 69% (31% solids), a short stop solution was added (solution of 8.0 phm water, 0.10 phm sodium salt of N,N-diethyldithiocarbatmate, 0.05 phm N,N-diethyl hydroxylamine and 0.22 phm potassium pyrophosphate).

The latex was filtered, stripped in a rotary evaporator to concentrate the latex. The final latex solids was 43.8%, pH 10.2 and viscosity 270 cps. There was no coagulum or throw out of N-(4-anilinophenyl) methacrylamide in the unstripped latex.

### Example 2

An emulsion was prepared by adding a hot solution (60-80°C) of 1.5 phm of N-(4-anilinophenyl) methacrylamide and 2.4 phm of KP-140 to an aqueous solution under agitation. The aqueous solution contained 30 phm water, 3.5 phm 39% active Siponate™ A2466 (alpha olefin sulfonate), 1.25 phm 45% active Dowfax™ 2Al (sodium dodecylphenoxybenzene disulfonate), 0.20 phm 85% Tamol™ SN, 0.1 phm sodium acid pyrophosphate and 0.1 phm tetrasodium salt of EDTA. The emulsion was then mixed with a room temperature solution of 2.0 phm methacrylic acid, 0.2 phm sodium acids pyrophosphate and 113 phm water. The emulsion was charged to a quart bottle followed by addition of 28.0 phm styrene and 0.50 phm tertiary dodecylmercaptan. 0.23 phm of p-menthane hydroperoxide and 70 phm of butadiene was then charged to the bottle and the bottle capped. 0.35 phm of the same iron activator solution of Example 1 was syringed into the bottle and the bottle was rotated in a 18°C bath. When the solids reached 31% (69% monomer conversion), the latex was shortstopped with a solution of 8.0 phm water, 1.8 phm Triton™ X-165 (octylphenoxy polyethoxy ethanol), 1.5 phm ammonium hydroxide, 0.1 phm of sodium salt of N,N-diethyldithiocarbamate and 0.05 phm N,N-diethylhydroxylamine. The final latex solids was 43.9%, pH 10.5 and viscosity 435 cps. There was no measurable coagulum before or after concentrating the latex in a rotary evaporator under vacuum nor was there N-(4-anilinophenyl)methacrylamide particles.

## Claims

1. A process for forming a rubber having polymer bound functionality comprising the emulsion polymerization at a temperature ranging from 0°C to 25°C of:
(a) at least one functionalized monomer that contains a polymerizable vinyl group selected from the group consisting of:
(A) amides having the structural formula: 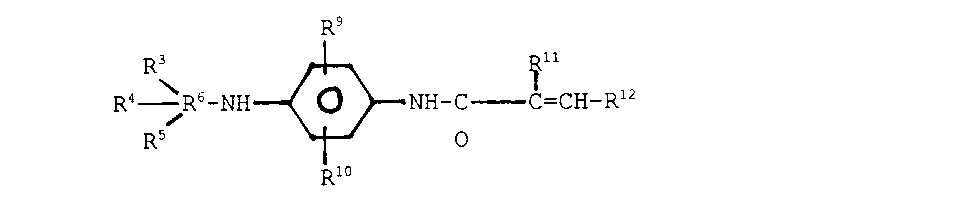 wherein R⁶ is an aryl radical, R³ and R⁴ are selected from the group consisting of hydrogen, alkyl radicals having from 1 to 4 carbon atoms and alkoxy radicals having from 1 to 4 carbon atoms, R⁵ is selected from the group consisting of hydrogen, alkyl radicals having from 1 to 4 carbon atoms, alkoxy radicals having from 1 to 4 carbon atoms and a radical having the following structural formula: 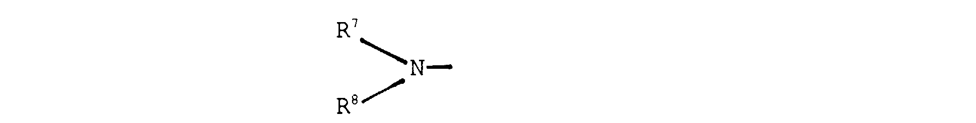 wherein R⁷ is selected from the group consisting of alkyl radicals having from 1 to 12 carbon atoms, cycloalkyl radicals having from 5 to 12 carbon atoms, aryl radicals having from 6 to 12 carbon atoms and aralkyl radicals having from 7 to 13 carbon atoms and R⁸ is selected from the group consisting of hydrogen and alkyl radicals having from 1 to 12 carbon atoms and wherein R⁹ and R¹⁰ are hydrogen or alkyl radicals having from 1 to 4 carbon atoms, R¹¹ is selected from the group consisting of hydrogen, methyl and ethyl; and R12 is hydrogen or phenyl;
(B) imides selected from the group consisting of
(1) compounds having the following structural formula: 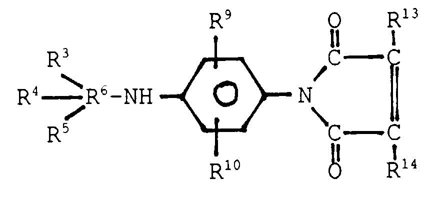 wherein R³, R⁴, R⁵, R⁹ and R¹⁰ are as previously defined herein under structural formula II and wherein R¹³ and R¹⁴ are selected from the group consisting of hydrogen and alkyl radicals having from 1 to 14 carbon atoms and
(2) compounds having the following structural formula: 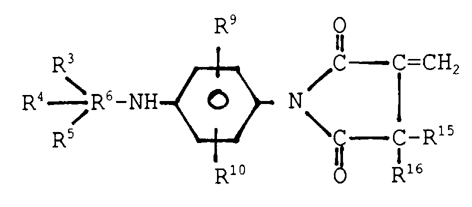 wherein R³, R⁴, R⁵, R⁶, R⁹ and R¹⁰ are as previously defined herein under structural formula I and wherein R¹⁵ and R¹⁶ are selected from the group consisting of hydrogen and alkyl radicals having from 1 to 4 carbon atoms, and
(C) phenols having the structural formula: 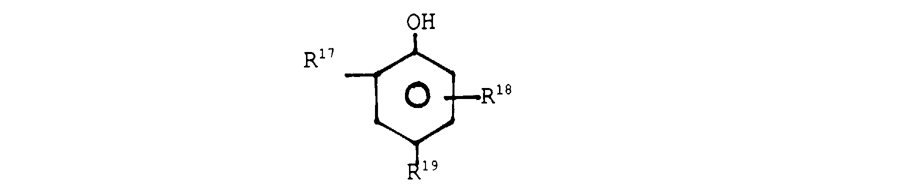 wherein R¹⁷ and R¹⁸ is a tert-alkyl radical having from 4 to 8 carbon atoms, R¹⁹ is selected from the group of radicals: 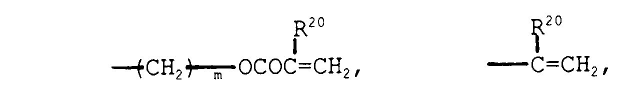 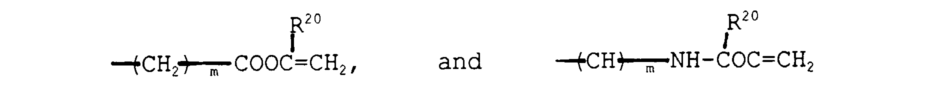 wherein R²⁰ is hydrogen or methyl and m is 0 to 3; and compounds with the structural formula: 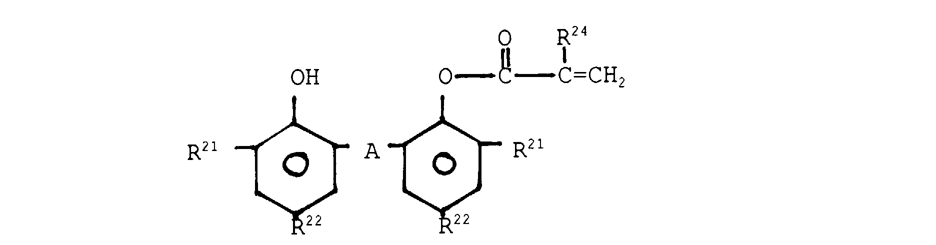 wherein R²¹ and R²² are selected from n-alkyl radicals having from 1 to 18 carbon atoms and secondary alkyl radicals having from 3 to 18 carbon atoms and t-alkyl radicals having from 4 to 8 carbon atoms; R²⁴ is H, CH₃ or C₂H₅ and A is selected from the radicals:
-CH₂-, 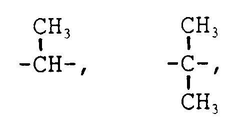 -S and -O-,
and compounds with the structural formula: 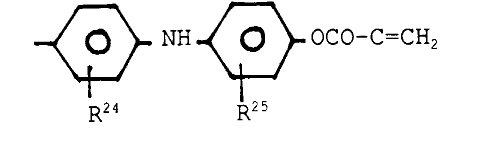 and 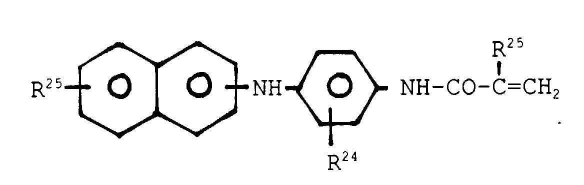 and 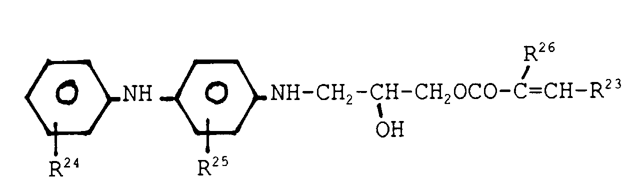 wherein each of R²⁴ and R²⁵ are alkyl radicals of 1 to 4 carbon atoms, R²⁶ is hydrogen or methyl and R²³ is hydrogen or phenyl; with
(b) at least one copolymerizable conjugated diene monomer selected from the group consisting of butadiene-1,3, 2-chlorobutadiene-1,3, isoprene, piperylene and conjugated hexadienes;
wherein the polymerization is conducted in the present of 10 to 70 parts by weight of a plasticizer based on 100 parts by weight of total monomers; said plasticizer being selected from:
(A) carboxylic acid esters selected from the group consisting of diesters of triethylene glycol, dibutoxy ethoxy ethyl formate, dialkyl diether glutarate, dibutoxyethyl adipate, dibutoxyethoxyethyl adipate, di-2-ethylhexyl adipate, tetraethylene glycol diheptanoate, propylene glycol dibenzoate, dipropylene glycol dibenzoate, triethylene glycol dibenzoate, butyl octyl phthalate, dimethyl phthalate, diethyl phthalate, dibutyl phthalate, dibutoxy ethyl phthalate, ^{\} di-2-ethylhexyl phthalate, tetraethylene glycol dioctoate, polyethylene glycol dioctoate, triethylene glycol di-2-ethylhexanoate, tetraethylene glycol di-2-ethylhexanoate, triethylene glycol caprate-caprylate, triethylene glycol di(caprate-caprylate), triethylene glycol dipelargonate, dibutyl sebacate, dibutoxyethyl sebacate, di-2-ethylhexyl sebacate, dioctyl sebacate, diethylene glycol mono-laurate and butoxyethyl oleate; or
(B) phosphates selected from the group consisting of 2-ethylhexyl diphenyl phosphate, iso-decyldiphenyl phosphate, tri-n-butyl phosphate, tri(2-ethylhexyl) phosphate, tributoxyethyl phosphate, tricresyl phosphate, trixylenyl phosphate and trixylyl phosphate; or
(C) formals selected from the group consisting of dibutoxyethoxy formal and di(butoxy-ethoxy-ethyl) formal; and
(D) N-butylbenzene sulfonamide.

2. The process of claim 1 characterized in that the monomer charge ratio by weight of functionalized monomer to conjugated diene ranges from 0.10 to 99.9 to 99.9 to 0.10.

3. The process of claim 1 characterized in that in addition to said functionalized monomer and said conjugated diene monomer, at least one vinyl monomer is polymerized, said vinyl monomer being selected from the group consisting of styrene, α-methylstyrene, divinylbenzene, vinyl chloride, vinyl acetate, vinylidene chloride, methyl methacrylate, ethyl acrylate, vinylpyridine, acrylonitrile, methacrylonitrile, methacrylic acid, itaconic acid and acrylic acid.

4. The process of claim 3 characterized in that the weight ratio of functionalized monomer to conjugated diene monomer to vinyl monomer may range from 5:75:20 to 95:5:0 parts per hundred parts by weight based on total weight of monomer.

5. A process of claim 1 characterized in that at least one functionalized monomer is from the group consisting of (a) amides having the structural formula: 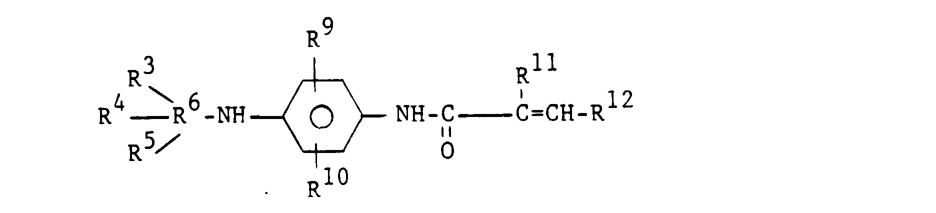 wherein R⁶ is an aryl radical, R³ and R⁴ are selected from the group consisting of hydrogen, alkyl radicals having from 1 to 4 carbon atoms and alkoxy radicals having from 1 to 4 carbon atoms, R⁵ is selected from the group consisting of hydrogen, alkyl radicals having from 1 to 4 carbon atoms, alkoxy radicals having from 1 to 4 carbon atoms and a radical having the following structural formula: 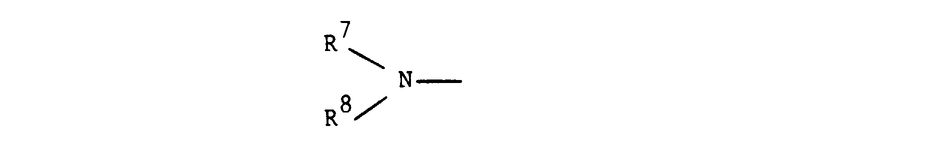 wherein R⁷ is selected from the group consisting of alkyl radicals having from 1 to 12 carbon atoms, cycloalkyl radicals having from 5 to 12 carbon atoms, aryl radicals having from 6 to 12 carbon atoms and aralkyl radicals having from 7 to 13 carbon atoms and R⁸ is selected from the group consisting of hydrogen and alkyl radicals having from 1 to 12 carbon atoms and wherein R⁹ and R¹⁰ are hydrogen or alkyl radicals having from 1 to 4 carbon atoms, R¹¹ is selected from the group consisting of hydrogen, methyl and ethyl; and R¹² is hydrogen or phenyl; and (b) imides selected from the group consisting of (1) compounds having the following structural formula: 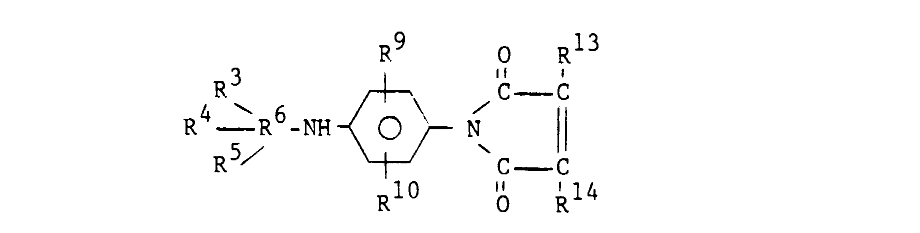 wherein R³, R⁴, R⁵, R⁹ and R¹⁰ are as previously defined herein under structural formula II and wherein R¹³ and R¹⁴ are selected from the group consisting of hydrogen and alkyl radicals having from 1 to 14 carbon atoms and (2) compounds having the following structural formula: 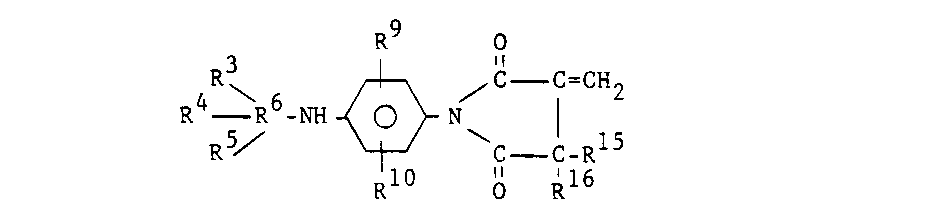 wherein R³, R⁴, R⁵, R⁶, R⁹ and R¹⁰ are as previously defined herein under structural formula I and wherein R¹⁵ and R¹⁶ are selected from the group consisting of hydrogen and alkyl radicals having from 1 to 4 carbon atoms.

6. A process according to claim 1 characterized in that the functionalized monomer is selected from the group of compounds represented by the structural formula: 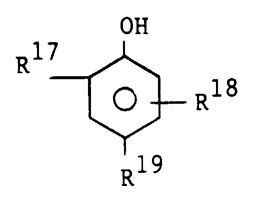 wherein R¹⁷ and R¹⁸ is a tert-alkyl radical having from 4 to 8 carbon atoms, R¹⁹ is selected from the group of radicals: 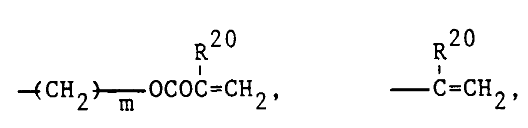 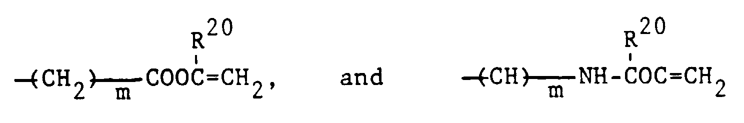 wherein R²⁰ is hydrogen or methyl and m is 0 to 3; and compounds with the structural formula: 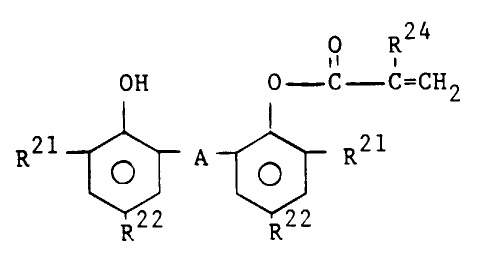 wherein R²¹ and R²² are selected from n-alkyl radicals having from 1 to 18 carbon atoms and secondary alkyl radicals having from 3 to 18 carbon atoms and t-alkyl radicals having from 4 to 8 carbon atoms; R²⁴ is H, CH₃ or C₂H₅ and A is selected from the radicals:
-CH₂-, 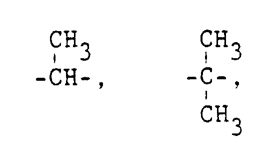 -S- and -O-,
and compounds with the structural formula: 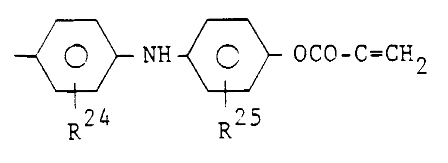 and 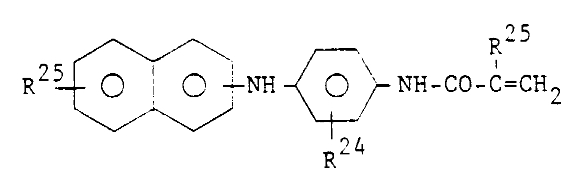 and 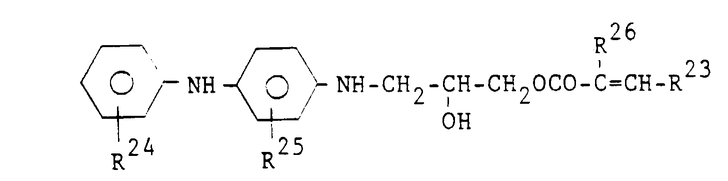 wherein each of R²⁴ and R²⁵ are alkyl radicals of 1 to 4 carbon atoms, R²⁶ is hydrogen or methyl and R²³ is hydrogen or phenyl.

7. The process of claim 1 characterized in that an ionic surfactant is used and is present in an amount ranging from 2 to 30 parts by weight of ionic surfactant per 100 parts by weight of organic components.

8. The process of claim 1 characterized in that said functionalized monomer is combined with said plasticizer and heated to a temperature of from 50°C to 90°C prior to being charged to the emulsion recipe containing the butadiene, isoprene or mixtures thereof.

9. The process of claim 1 characterized in that the phosphate is tributoxyethyl phosphate.

## Patentansprüche

1. Verfahren zur Bildung eines Kautschuks mit Polymer-gebundener Funktionalität, umfassend die Emulsionspolymerisation bei einer Temperatur im Bereich von 0°C bis 25°C von:
(a) mindestens einem funktionalisierten Monomer, das eine polymerisierbare Vinylgruppe enthält und ausgewählt ist aus der Gruppe, die besteht aus:
(A) Amiden mit der Strukturformel 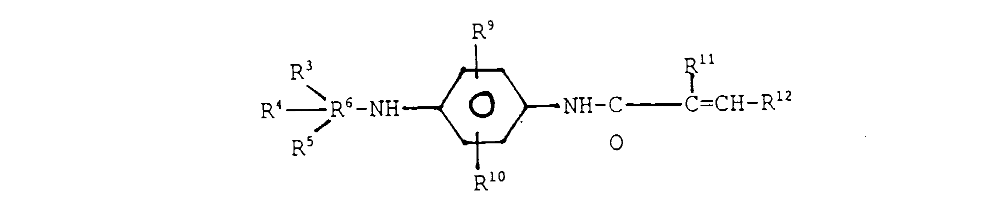 worin R^{**6**} ein Arylrest ist, R^{**3**} und R^{**4**} aus der Gruppe ausgewählt sind, die besteht aus Wasserstoff, Alkylresten mit 1 bis 4 Kohlenstoffatomen und Alkoxyresten mit 1 bis 4 Kohlenstoffatomen, R^{**5**} ausgewählt ist aus der Gruppe, die besteht aus Wasserstoff, Alkylresten mit 1 bis 4 Kohlenstoffatomen, Alkoxyresten mit 1 bis 4 Kohlenstoffatomen und einem Rest mit der folgenden Strukturformel: 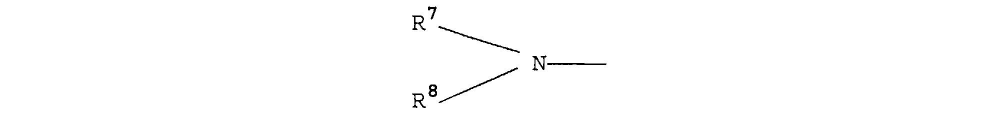 worin R^{**7**} ausgewählt ist aus der Gruppe, die besteht aus Alkylresten mit 1 bis 12 Kohlenstoffatomen, Cycloalkylresten mit 5 bis 12 Kohlenstoffatomen, Arylresten mit 6 bis 12 Kohlenstoffatomen und Aralkylresten mit 7 bis 13 Kohlenstoffatomen, und R^{**8**} ausgewählt ist aus der Gruppe, die besteht aus Wasserstoff und Alkylresten mit 1 bis 12 Kohlenstoffatomen, und worin R^{**9**} und R^{**10**} für Wasserstoff oder Alkylreste mit 1 bis 4 Kohlenstoffatomen stehen, R^{**11**} aus der Gruppe ausgewählt ist, die aus Wasserstoff, Methyl und Ethyl besteht; und R^{**12**} Wasserstoff oder Phenyl ist;
(B) Imiden, die ausgewählt sind aus der Gruppe, die besteht aus
(1) Verbindungen mit der folgenden Strukturformel: 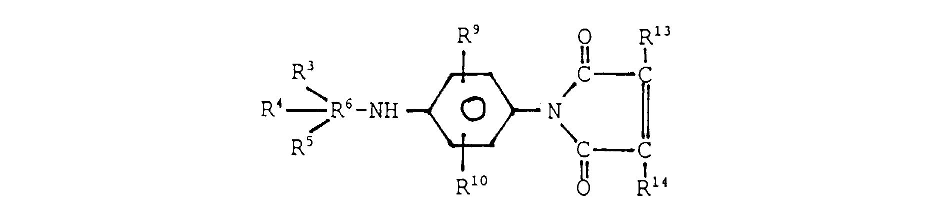 worin R^{**3**}, R^{**4**}, R^{**5**}, R^{**9**} und R^{**10**} wie hierin oben unter Strukturformel II definiert sind und worin R^{**13**} und R^{**14**} aus der Gruppe ausgewählt sind, die aus Wasserstoff und Alkylresten mit 1 bis 14 Kohlenstoffatomen besteht, und
(2) Verbindungen mit der folgenden Strukturformel: 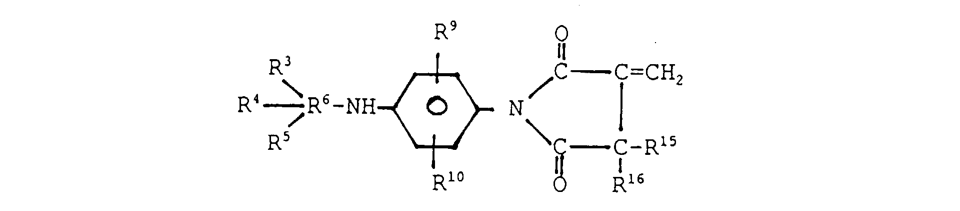 worin R^{**3**}, R^{**4**}, R^{**5**}, R^{**6**}, R^{**9**} und R^{**10**} wie hierin oben unter Strukturformel I definiert sind und worin R^{**15**} und R^{**16**} aus der Gruppe ausgewählt sind, die aus Wasserstoff und Alkylresten mit 1 bis 4 Kohlenstoffatomen besteht, und
(C) Phenolen mit der Strukturformel: 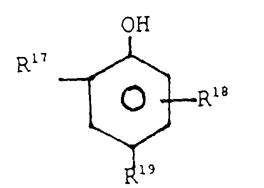 worin R^{**17**} und R^{**18**} einen tert.-Alkylrest mit 4 bis 8 Kohlenstoffatomen darstellen, R^{**19**} ausgewählt ist aus der Gruppe der Reste : 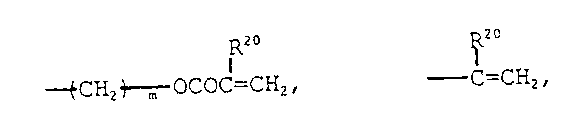 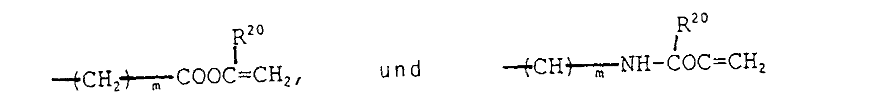 worin R^{**20**} für Wasserstoff oder Methyl steht und m 0 bis 3 bedeutet; und Verbindungen mit der Strukturformel: 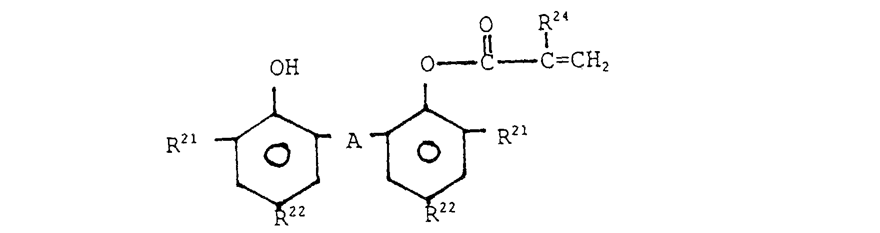 worin R^{**21**} und R^{**22**} ausgewählt sind aus n-Alkylresten mit 1 bis 18 Kohlenstoffatomen und sekundären Alkylresten mit 3 bis 18 Kohlenstoffatomen und t-Alkylresten mit 4 bis 8 Kohlenstoffatomen; R^{**24**} für H, CH_{**3**} oder C_{**2**}H_{**5**} steht und A ausgewählt ist aus den Resten:
-CH₂-, 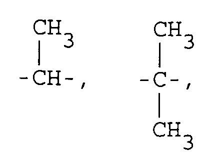 -S- und -O-
und Verbindungen mit der Strukturformel: 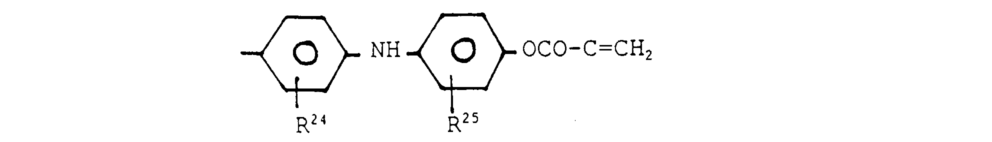 und 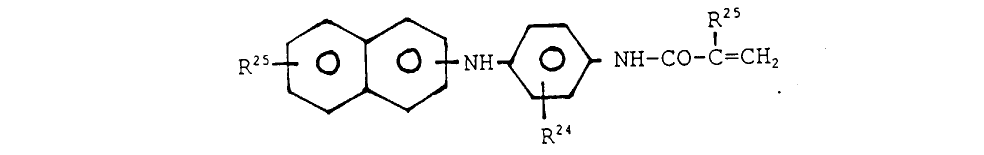 und 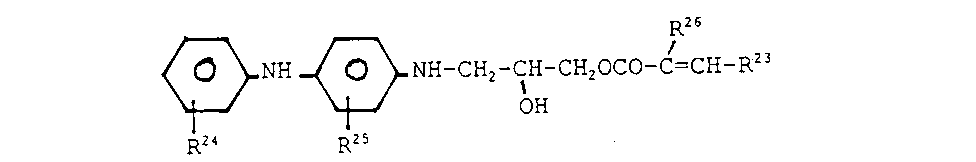 worin R^{**24**} und R^{**25**} jeweils Alkylreste mit 1 bis 4 Kohlenstoffatomen sind, R^{**26**} für Wasserstoff oder Methyl steht und R^{**23**} Wasserstoff oder Phenyl darstellt; mit
(b) mindestens einem copolymerisierbaren konjugierten Dien-Monomer, das ausgewählt ist aus der Gruppe, die aus Butadien-1,3, 2-Chlorbutadien-1,3, Isopren, Piperylen und konjugierten Hexadienen besteht;
wobei die Polymerisation in Anwesenheit von 10 bis 70 Gew.-Teilen eines Weichmachers auf Basis von 100 Gew.- Teilen der gesamten Monomere durchgeführt wird; wobei der Weichmacher ausgewählt ist aus:
(A) Carbonsäureestern, ausgewählt aus der Gruppe, die besteht aus Diestern von Triethylenglykol, Dibutoxyethoxyethylformiat, Dialkyldietherglutarat, Di-butoxyethyladipat, Dibutoxyethoxyethyladipat, Di-2-ethylhexyladipat, Tetraethylenglykoldiheptanoat, Propylenglykoldibenzoat, Dipropylenglykoldibenzoat,-Triethylenglykoldibenzoat, Butyloctylphthalat, Di-methylphthalat, Diethylphthalat, Dibutylphthalat, Dibutoxyethylphthalat, Di-2-ethylhexylphthalat, Tetraethylenglykoldioctoat, Polyethylenglykoldioctoat, Triethylenglykoldi-2-ethylhexanoat, Tetraethylenglykoldi-2-ethylhexanoat, Triethylenglykolcaprat-caprylat, Triethylenglykoldi(caprat-caprylat), Triethylenglykol-dipelargonat, Dibutylsebacat, Di-butoxyethylsebacat, Di-2-ethylhexylsebacat, Dioctylsebacat, Diethylenglykolmonolaurat und Butoxyethyloleat; oder
(B) Phosphaten, ausgewählt aus der Gruppe, die besteht aus 2-Ethylhexyldiphenylphosphat, iso-Decyldiphenylphosphat, Tri-n-butylphosphat, Tri-(2-ethylhexyl)-phosphat, Tributoxyethylphosphat, Trikresylphosphat, Trixylenylphosphat und Trixylylphosphat; oder
(C) Formalen, ausgewählt aus der Gruppe, die aus Dibutoxyethoxyformal und Di(butoxyethoxyethyl)formal besteht; und
(D) N-Butylbenzolsulfonamid.

2. Verfahren nach Anspruch 1, dadurch gekennzeichnet, daß das Monomer-Beschickungs-Gewichtsverhältnis von funktionalisiertem Monomer zu konjugiertem Dien im Bereich von 0,10 zu 99,9 bis 99,9 zu 0,10 liegt.

3. Verfahren nach Anspruch 1, dadurch gekennzeichnet, daß zusätzlich zu dem funktionalisierten Monomer und dem konjugierten Dien-Monomer mindestens ein Vinylmonomer polymerisiert wird, wobei das Vinylmonomer ausgewählt ist aus der Gruppe, die aus Styrol, α-Methylstyrol, Divinylbenzol, Vinylchlorid, Vinylacetat, Vinylidenchlorid, Methylmethacrylat, Ethylacrylat, Vinylpyridin, Acrylnitril, Methacrylnitril, Methacrylsäure, Itaconsäure und Acrylsäure besteht.

4. Verfahren nach Anspruch 3, dadurch gekennzeichnet, daß das Gewichtsverhältnis von funktionalisiertem Monomer zu konjugiertem Dien-Monomer zu Vinylmonomer im Bereich von 5:75:20 bis 95:5:0 Teile pro 100 Gew.-Teile, bezogen auf das Monomer-Gesamtgewicht, liegen kann.

5. Verfahren nach Anspruch 1, dadurch gekennzeichnet, daß mindestens ein funktionalisiertes Monomer aus der Gruppe kommt, die besteht aus (a) Amiden mit der Strukturformel: 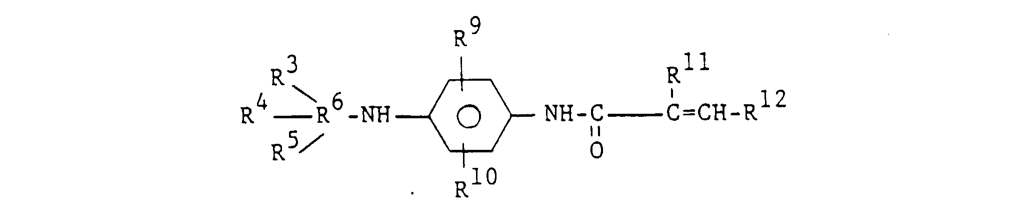 worin R^{**6**} ein Arylrest ist, R^{**3**} und R^{**4**} ausgewählt sind aus der Gruppe, die besteht aus Wasserstoff, Alkylresten mit 1 bis 4 Kohlenstoffatomen und Alkoxyresten mit 1 bis 4 Kohlenstoffatomen, R^{**5**} ausgewählt ist aus der Gruppe, die besteht aus Wasserstoff, Alkylresten mit 1 bis 4 Kohlenstoffatomen, Alkoxyresten mit 1 bis 4 Kohlenstoffatomen und einem Rest mit der folgenden Strukturformel: 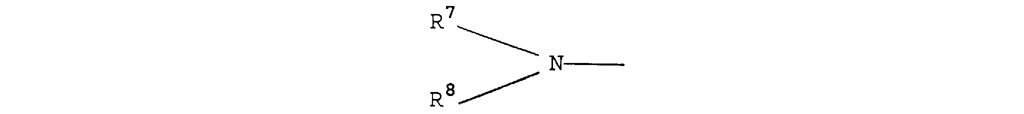 worin R^{**7**} ausgewählt ist aus der Gruppe, die besteht aus Alkylresten mit 1 bis 12 Kohlenstoffatomen, Cycloalkylresten mit 5 bis 12 Kohlenstoffatomen, Arylresten mit 6 bis 12 Kohlenstoffatomen und Aralkylresten mit 7 bis 13 Kohlenstoffatomen, und R^{**8**} ausgewählt ist aus der Gruppe, die besteht aus Wasserstoff und Alkylresten mit 1 bis 12 Kohlenstoffatomen, und worin R^{**9**} und R^{**10**} für Wasserstoff oder Alkylreste mit 1 bis 4 Kohlenstoffatomen stehen, R^{**11**} aus der Gruppe ausgewählt ist, die aus Wasserstoff, Methyl und Ethyl besteht; und R^{**12**} für Wasserstoff oder Phenyl steht; und (b) Imiden, ausgewählt aus der Gruppe, die besteht aus (1) Verbindungen mit der folgenden Strukturformel: 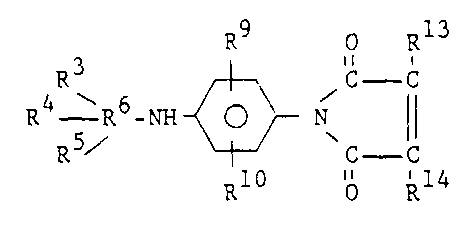 worin R^{**3**}, R^{**4**}, R^{**5**}, R^{**9**} und R^{**10**} wie hierin oben unter Strukturformel II definiert sind und worin R^{**13**} und R^{**14**} aus der Gruppe ausgewählt sind, die aus Wasserstoff und Alkylresten mit 1 bis 14 Kohlenstoffatomen besteht, und (2) Verbindungen mit der folgenden Strukturformel: 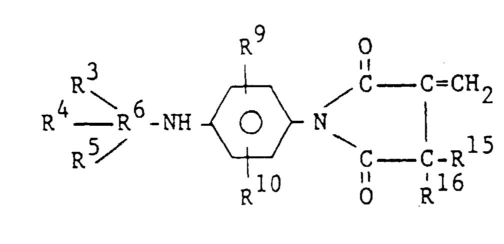 worin R^{**3**}, R^{**4**}, R^{**5**}, R^{**6**}, R^{**9**} und R^{**10**} wie hierin oben unter Strukturformel I definiert sind und worin R^{**15**} und R^{**16**} aus der Gruppe ausgewählt sind, die aus Wasserstoff und Alkylresten mit 1 bis 4 Kohlenstoffatomen besteht.

6. Verfahren nach Anspruch 1, dadurch gekennzeichnet, daß das funktionalisierte Monomer ausgewählt ist aus der Gruppe von Verbindungen, die durch die Strukturformel: 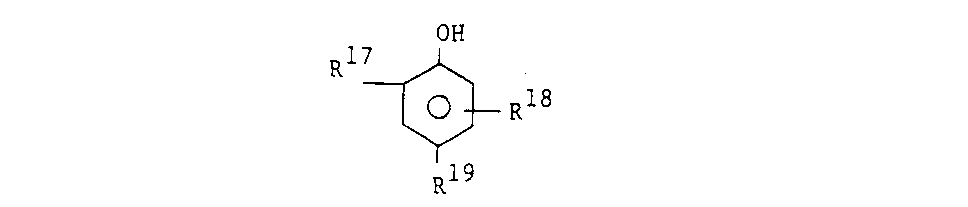 dargestellt wird, worin R^{**17**} und R^{**18**} für einen tert.-Alkylrest mit 4 bis 8 Kohlenstoffatomen stehen, R^{**19**} ausgewählt ist aus der Gruppe von Resten: 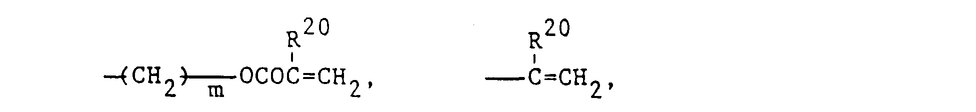 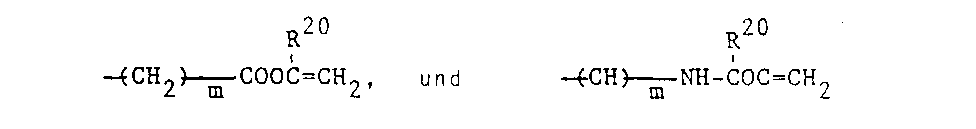 worin R^{**20**} für Wasserstoff oder Methyl steht und m 0 bis 3 bedeutet; und Verbindungen mit der Strukturformel: 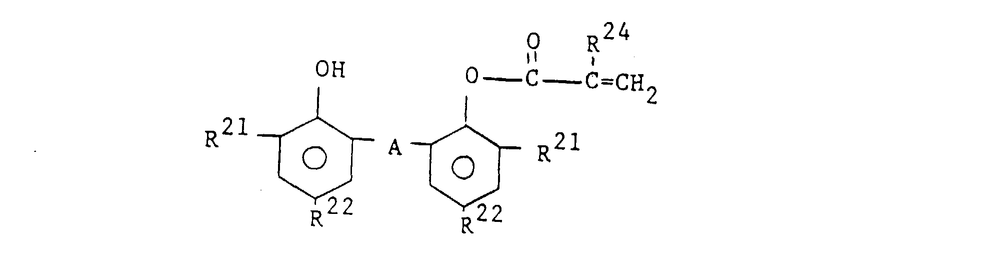 worin R^{**21**} und R^{**22**} ausgewählt sind aus n-Alkylresten mit 1 bis 18 Kohlenstoffatomen und sekundären Alkylresten mit 3 bis 18 Kohlenstoffatomen und t-Alkylresten mit 4 bis 8 Kohlenstoffatomen; R^{**24**} für H, CH_{**3**} oder C_{**2**}H_{**5**} steht und A ausgewählt ist aus den Resten:
-CH_{**2**}-, 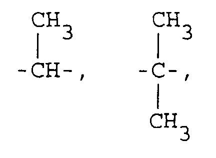 -S- und -O-;
und Verbindungen mit der Strukturformel: 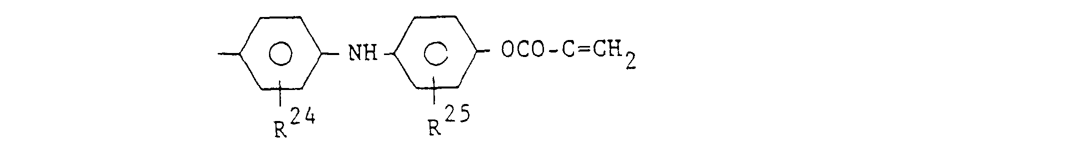 und 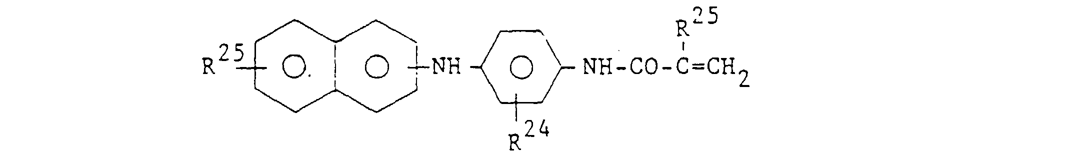 und 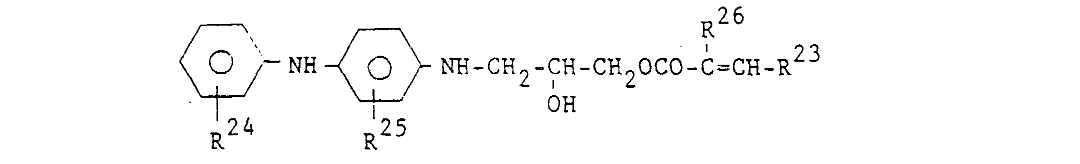 worin R^{**24**} und R^{**25**} jeweils Alkylreste mit 1 bis 4 Kohlenstoffatomen sind, R^{**26**} Wasserstoff oder Methyl darstellt und R^{**23**} für Wasserstoff oder Phenyl steht.

7. Verfahren nach Anspruch 1, dadurch gekennzeichnet, daß ein ionisches Tensid verwendet wird und in einer Menge im Bereich von 2 bis 30 Gew.-Teilen ionisches Tensid pro 100 Gew.-Teile organische Komponenten anwesend ist.

8. Verfahren nach Anspruch 1, dadurch gekennzeichnet, daß das funktionalisierte Monomer vor seiner Einführung in die Emulsions-Rezeptur, die Butadien, Isopren oder Mischungen davon enthält, mit dem Weichmacher vereinigt und auf eine Temperatur von 50°C bis 90°C erwärmt wird.

9. Verfahren nach Anspruch 1, dadurch gekennzeichnet, daß das Phosphat Tributoxyethylphosphat ist.

## Revendications

1. Procédé pour former un caoutchouc possédant une fonctionnalité liée au polymère, comprenant la polymérisation en émulsion à une température se situant dans le domaine de 0°C à 25°C:
(a) d'au moins un monomère fonctionnalisé qui contient un groupe vinyle polymérisable choisi parmi le groupe constitué par:
(A) des amides répondant à la formule développée: 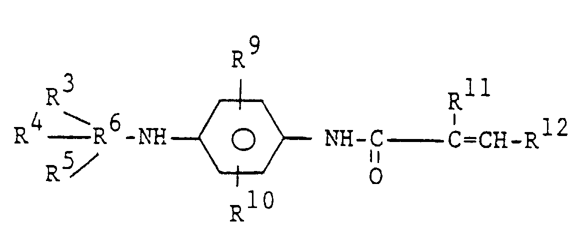 dans laquelle R⁶ représente un radical aryle, R³ et R⁴ sont choisis parmi le groupe constitué par un atome d'hydrogène, par des radicaux alkyle contenant de 1 à 4 atomes de carbone et par des radicaux alcoxy contenant de 1 à 4 atomes de carbone, R⁵ est choisi parmi le groupe constitué par un atome d'hydrogène, par des radicaux alkyle contenant de 1 à 4 atomes de carbone, par des radicaux alcoxy contenant de 1 à 4 atomes de carbone et par un radical répondant à la formule développée ci-après : 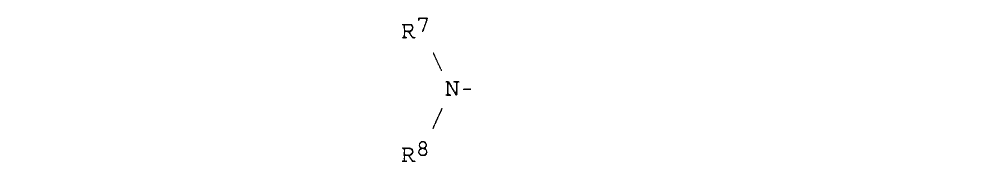 dans laquelle R⁷ est choisi parmi le groupe constitué par des radicaux alkyle contenant de 1 à 12 atomes de carbone, par des radicaux cycloalkyle contenant de 5 à 12 atomes de carbone, par des radicaux aryle contenant de 6 à 12 atomes de carbone et par des radicaux aralkyle contenant de 7 à 13 atomes de carbone, et R⁸ est choisi parmi le groupe constitué par un atome d'hydrogène et par des radicaux alkyle contenant de 1 à 12 atomes de carbone, et dans laquelle R⁹ et R¹⁰ représentent un atome d'hydrogène ou des radicaux alkyle contenant de 1 à 4 atomes de carbone, R¹¹ est choisi parmi le groupe constitué par un atome d'hydrogène, un radical méthyle et un radical éthyle, et R¹² représente un atome d'hydrogène ou un radical phényle; et
(B) des imides choisis parmi le groupe constitué par
(1) des composés répondant à la formule développée ci-après: 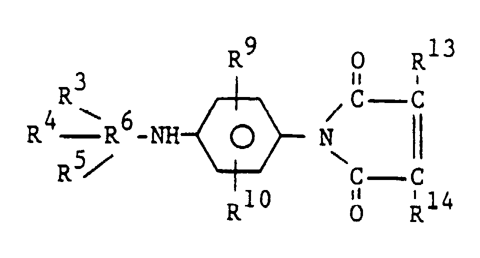 dans laquelle R³, R⁴, R⁵, R⁹ et R¹⁰ sont tels que définis ci-dessus sous la formule développée II, et dans laquelle R¹³ et R¹⁴ sont choisis parmi le groupe constitué par un atome d'hydrogène et par des radicaux alkyle contenant de 1 à 14 atomes de carbone, et par
(2) des composés répondant à la formule développée ci-après: 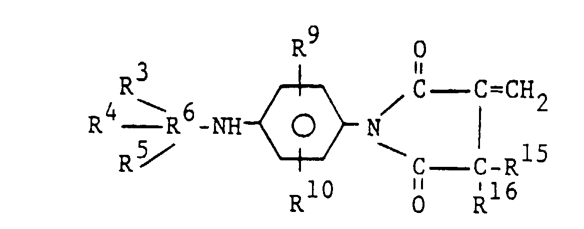 dans laquelle R³, R⁴, R⁵, R⁶, R⁹ et R¹⁰ sont tels que définis ci-dessus sous la formule développée I et dans laquelle R¹⁵ et R¹⁶ sont choisis parmi le groupe constitué par un atome d'hydrogène et par des radicaux alkyle contenant de 1 à 4 atomes de carbone, et
(C) des phénols répondant à la formule développée: 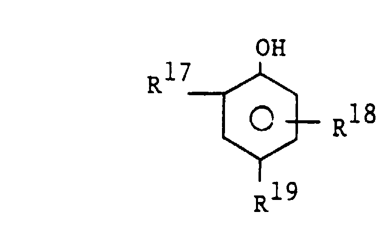 dans laquelle R¹⁷ et R¹⁸ représentent un radical alkyle tertiaire contenant de 4 à 8 atomes de carbone, R¹⁹ est choisi parmi le groupe de radicaux 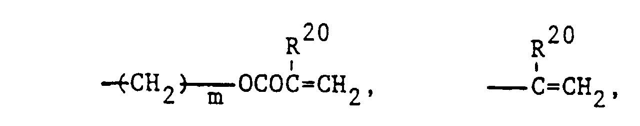 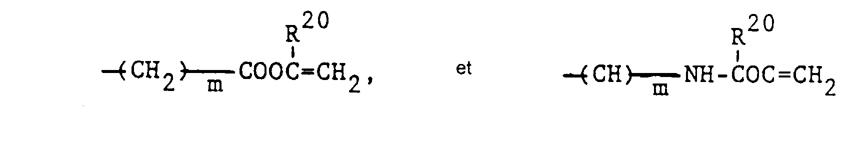 dans lesquels R²⁰ représente un atome d'hydrogène ou un radical méthyle et m est égal à 0-3; et des composés répondant à la formule développée : 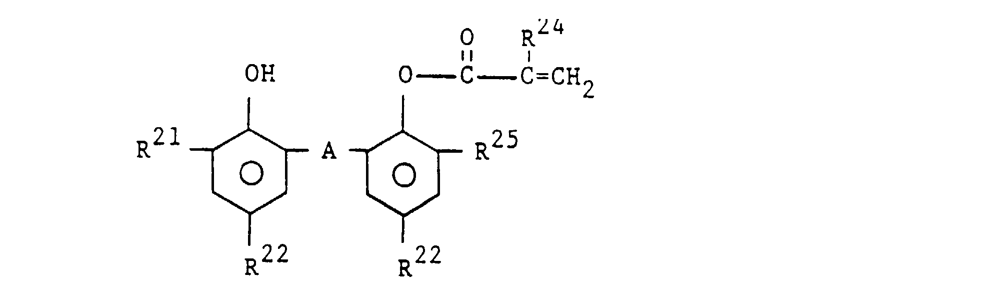 dans laquelle R²¹ et R²² sont choisis parmi des radicaux n-alkyle contenant de 1 à 18 atomes de carbone et par des radicaux alkyle secondaires contenant de 3 à 18 atomes de carbone, et parmi des radicaux alkyle tertiaires contenant de 4 à 8 atomes de carbone; R²⁴ représente H, CH₃ ou C₂H₅ et A est choisi parmi les radicaux:
-CH₂-, 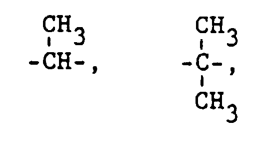 -S- et -O-.
et des composés répondant aux formules développées : 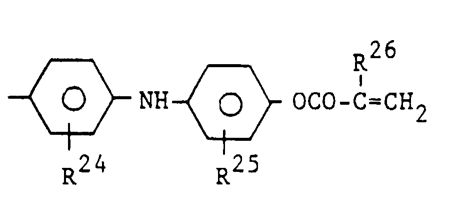 et 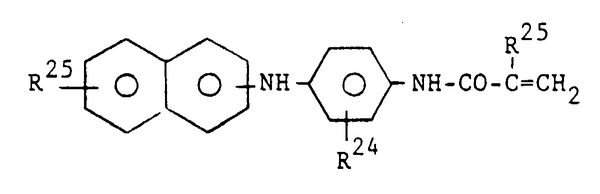 et 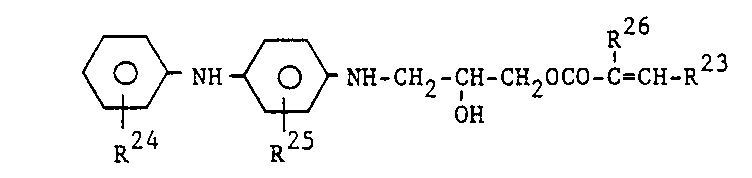 dans lesquelles chacun des radicaux R²⁴ et R²⁵ représente des radicaux alkyle contenant de 1 à 4 atomes de carbone, R²⁶ représente un atome d'hydrogène ou un radical méthyle et R²³ représente un atome d'hydrogène ou un radical phényle; avec
(b) au moins un monomère diénique conjugué copolymérisable choisi parmi le groupe constitué par le butadiène-1,3, le 2-chlorobutadiène-1,3, l'isoprène, le pipérylène et des hexadiènes conjugués;
dans lequel on effectue la polymérisation en présence d'environ 10 à environ 70 parties en poids d'un plastifiant, basées sur 100 parties en poids de la quantité totale des monomères; ledit plastifiant étant choisi parmi :
(A) des esters d'acides carboxyliques choisis parmi le groupe constitué par des diesters de triéthylèneglycol, le formiate de dibutoxyéthoxyéthyle, le glutarate de diéther dialkylique, l'adipate de dibutoxyéthyle, l'adipate de dibutoxyéthoxyéthyle, l'adipate de di-2-éthylhexyle, le diheptanoate de tétraéthylèneglycol, le dibenzoate de propylèneglycol, le dibenzoate de dipropylèneglycol, le dibenzoate de triéthylèneglycol, le phtalate de butyloctyle, le phtalate de diméthyle, le phtalate de diéthyle, le phtalate de dibutyle, le phtalate de dibutoxyéthyle, le phtalate de di-2-éthylhexyle, le dioctoate de tétraéthylèneglycol, le dioctoate de polyéthylèneglycol, le di-2-éthylhexanoate de triéthylèneglycol, le di-2-éthylhexanoate de tétraéthylèneglycol, le caprate-caprylate de triéthylèneglycol, le di(caprate-caprylate) de triéthylèneglycol, le dipélargonate de triéthylèneglycol, le sébacate de dibutyle, le sébacate de dibutoxyéthyle, le sébacate de di-2-éthylhexyle, le sébacate de dioctyle, le monolaurate de diéthylèneglycol et l'oléate de butoxyéthyle;
(B) des phosphates choisis parmi le groupe constitué par le 2-éthylhexyldiphénylphosphate, l'iso-décyldiphénylphosphate, le tri-n-butylphosphate, le tri(2-éthylhexyl)phosphate, le tributoxyéthylphosphate, le tricrésylphosphate, le trixylénylphosphate et le trixylylphosphate; ou
(C) des formals choisis parmi le groupe constitué par le dibutoxyéthoxyformal et le di(butoxy-éthoxy-éthyl)formal; et
(D) le N-butylbenzènesulfonamide.

2. Procédé selon la revendication 1, caractérisé en ce que le rapport pondéral de la charge de monomères du monomère fonctionnalisé au monomère diénique conjugué se situe de 0,10-99,9 à 99,9-0,10.

3. Procédé selon la revendication 1, caractérisé en ce qu'en plus dudit monomère fonctionnalisé et dudit monomère diénique conjugué copolymérisable, on polymérise au moins un monomère vinylique, ledit monomère vinylique étant choisi parmi le groupe constitué par le styrène, par l'α-méthylstyrène, par le divinylbenzène, par le chlorure de vinyle, par l'acétate de vinyle, par le chlorure de vinylidène, par le méthacrylate de méthyle, par l'acrylate d'éthyle, par la vinylpyridine, par l'acrylonitrile, par le méthacrylonitrile, par l'acide méthacrylique, par l'acide itaconique et par l'acide acrylique.

4. Procédé selon la revendication 3, caractérisé en ce que le rapport pondéral du monomère fonctionnalisé au monomère diénique conjugué au monomère vinylique peut se situer de 5:75:20 à 95:5:0 parties par 100 parties basées sur la quantité totale des monomères.

5. Procédé selon la revendication 1, caractérisé en ce qu'au moins un monomère fonctionnalisé est choisi parmi le groupe constitué par (a) des amides répondant à la formule développée: 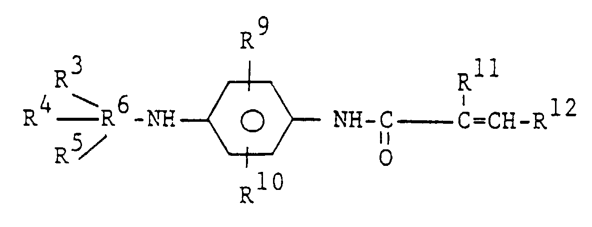 dans laquelle R⁶ représente un radical aryle, R³ et R⁴ sont choisis parmi le groupe constitué par un atome d'hydrogène, par des radicaux alkyle contenant de 1 à 4 atomes de carbone et par des radicaux alcoxy contenant de 1 à 4 atomes de carbone, R⁵ est choisi parmi le groupe constitué par un atome d'hydrogène, par des radicaux alkyle contenant de 1 à 4 atomes de carbone, par des radicaux alcoxy contenant de 1 à 4 atomes de carbone et par un radical répondant à la formule développée ci-après: 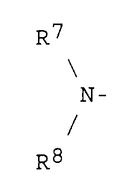 dans laquelle R⁷ est choisi parmi le groupe constitué par des radicaux alkyle contenant de 1 à 12 atomes de carbone, par des radicaux cycloalkyle contenant de 5 à 12 atomes de carbone, par des radicaux aryle contenant de 6 à 12 atomes de carbone et par des radicaux aralkyle contenant de 7 à 13 atomes de carbone, et R⁸ est choisi parmi le groupe constitué par un atome d'hydrogène et par des radicaux alkyle contenant de 1 à 12 atomes de carbone, et dans laquelle R⁹ et R¹⁰ représentent un atome d'hydrogène ou des radicaux alkyle contenant de 1 à 4 atomes de carbone, R¹¹ est choisi parmi le groupe constitué par un atome d'hydrogène, un radical méthyle et un radical éthyle, et R¹² représente un atome d'hydrogène ou un radical phényle; et
(b) des imides choisis parmi le groupe constitué par
(1) des composés répondant à la formule développée ci-après: 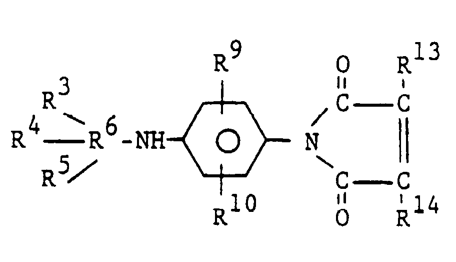 dans laquelle R³, R⁴, R⁵, R⁹ et R¹⁰ sont tels que définis ci-dessus sous la formule développée II, et dans laquelle R¹³ et R¹⁴ sont choisis parmi le groupe constitué par un atome d'hydrogène et par des radicaux alkyle contenant de 1 à 14 atomes de carbone, et par (2) des composés répondant à la formule développée ci-après: 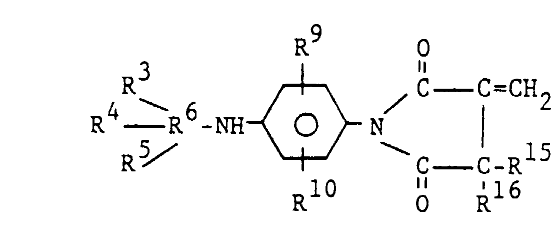 dans laquelle R³, R⁴, R⁵, R⁶, R⁹ et R¹⁰ sont tels que définis ci-dessus sous la formule développée I et dans laquelle R¹⁵ et R¹⁶ sont choisis parmi le groupe constitué par un atome d'hydrogène et par des radicaux alkyle contenant de 1 à 4 atomes de carbone.

6. Procédé selon la revendication 1, caractérisé en ce que le monomère fonctionnalisé est choisi parmi le groupe de composés représentés par la formule développée: 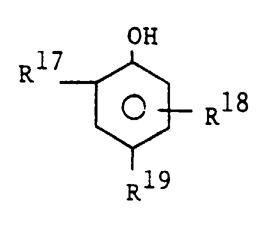 dans laquelle R¹⁷ et R¹⁸ représentent un radical alkyle tertiaire contenant de 4 à 8 atomes de carbone, R¹⁹ est choisi parmi le groupe de radicaux 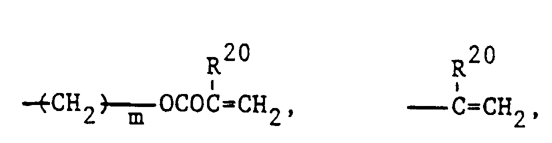 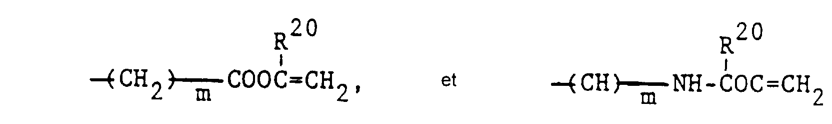 dans lesquels R²⁰ représente un atome d'hydrogène ou un radical méthyle et m est égal à 0-3; et des composés répondant à la formule développée: 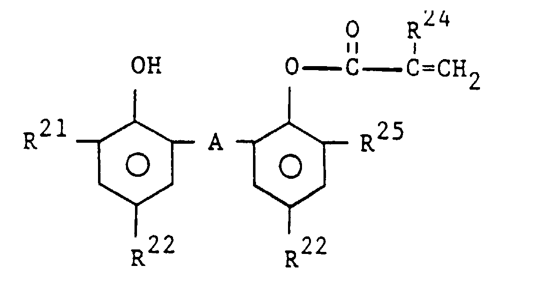 dans laquelle R²¹ et R²² sont choisis parmi des radicaux n-alkyle contenant de 1 à 18 atomes de carbone et par des radicaux alkyle secondaires contenant de 3 à 18 atomes de carbone, et parmi des radicaux alkyle tertiaires contenant de 4 à 8 atomes de carbone; R²⁴ représente H, CH₃ ou C₂H₅ et A est choisi parmi les radicaux:
-CH₂-, 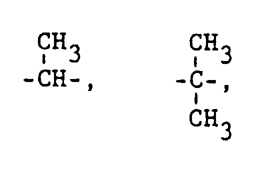 -S- et -O-.
et des composés répondant aux formules développées : 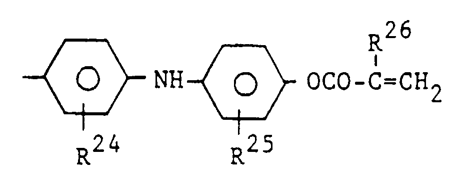 et 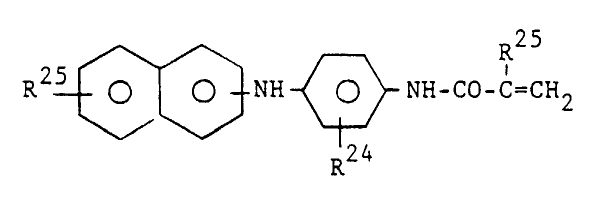 et 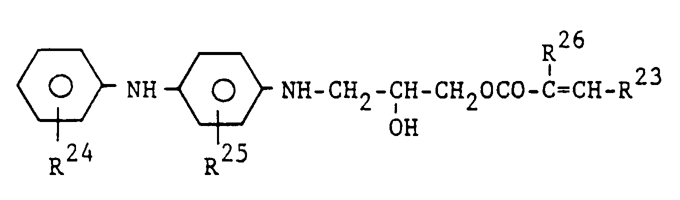 dans lesquelles chacun des radicaux R²⁴ et R²⁵ représente des radicaux alkyle contenant de 1 à 4 atomes de carbone, R²⁶ représente un atome d'hydrogène ou un radical méthyle et R²³ représente un atome d'hydrogène ou un radical phényle.

7. Procédé selon la revendication 1, caractérisé en ce qu'on utilise un agent tensioactif ionique présent en une quantité se situant dans le domaine de 2 à 30 parties en poids d'agent tensioactif ionique par 100 parties en poids des composants organiques.

8. Procédé selon la revendication 1, caractérisé en ce que ledit monomère fonctionnalisé est combiné avec ledit plastifiant et chauffé à une température de 50°C à 90°C avant de le charger dans la formulation d'émulsion contenant le butadiène, l'isoprène ou leurs mélanges.

9. Procédé selon la revendication 1, caractérisé en ce que ledit phosphate est le tributoxyéthylphosphate.
